# EUROPÄISCHE PATENTSCHRIFT

(11) **EP 1 968 791 B1**
(45) Veröffentlichungstag und Bekanntmachung des Hinweises auf die Patenterteilung: **04.09.2019**
(21) Anmeldenummer: 06829818.1
(22) Anmeldetag: 21.12.2006
(51) Int. Cl.: B32B 27/08, B32B 27/34, B32B 27/36, B32B 27/40, A41D 19/00, A41D 31/00

(54) **WASSERDICHTE, WASSERDAMPFDURCHLÄSSIGE MEHRSCHICHTMEMBRAN**
IMPERVIOUS, STEAM-PERMEABLE MULTI-LAYER MEMBRANE
MEMBRANE MULTICOUCHE ETANCHE A L'EAU ET PERMEABLE A LA VAPEUR D'EAU

(30) Priorität: 24.12.2005 EP 05028462
(43) Veröffentlichungstag der Anmeldung: 17.09.2008
(73) Patentinhaber: Sympatex Technologies GmbH, 85774 Unterföhring (DE)
(72) Erfinder: WITTMANN, Gabriele Beate, 81927 München (DE); VAN DE VEN, Henricus Joannes Maria, NL-6825 CT Arnhem (NL); KIEL, Andrea Annelene, 42115 Wuppertal (DE)
(74) Vertreter: Oberlein, Gerriet H. R.
(86) Internationale Anmeldenummer: PCT/EP2006/012385
(87) Internationale Veröffentlichungsnummer: WO 2007/073924

(56) Entgegenhaltungen:
- EP-A- 1 264 684
- JULIE SAMMS, ET AL.: "High Moisture Vapor Transmission Thermoplastic Polyurethanes" INTERNET ARTICLE, [Online] 2002, XP002434959 Gefunden im Internet: URL:http://www.deerfieldurethane.com/breat hablespaper9-5-02.pdf> [gefunden am 2007-05-24]

## Beschreibung

Die Erfindung betrifft eine wasserdichte, wasserdampfdurchlässige Mehrschichtmembran, mit mindestens einer ersten und einer zweiten Schicht, wobei alle Schichten aus einem thermoplastischen Polymer aus der Gruppe der Polyetherester, der Gruppe der Polyetheramide oder der Gruppe der Polyetherurethane bestehen und miteinander verbunden sind.

Derartige Membranen sind beispielsweise aus EP 1 264 684 A1 bekannt. Bei diesen Membranen wird zunächst durch Beschichten eines Trägers mit einer Lösung, welche das thermoplastische Polymer enthält, die erste Schicht erzeugt. Anschließend wird die zweite Schicht der Membran durch Beschichten der ersten Schicht erzeugt. Hierzu wird ausgeführt, dass die für die Mehrschichtmembran erforderliche Wasserdampfdurchlässigkeit dadurch erreicht wird, dass dem Polymer für die zweite Schicht ein kompatibler hydrophiler Weichmacher zugegeben wird, bevor dieses zur Beschichtung der ersten Schicht eingesetzt wird. Des Weiteren sollen gemäß EP 1 264 684 A1 entweder die gleichen oder ähnliche Polymere für benachbarte Schichten eingesetzt werden. Würden nämlich unterschiedliche Gruppen von den aufgeführten Polymergruppen in benachbarten Schichten eingesetzt, führt dies dazu, dass benachbarte Schichten nur geringfügig aneinander haften, wodurch derartige Mehrschichtmembranen schon bei geringsten Beanspruchungen delaminieren, das heißt, sich in einzelne Schichten auflösen, wodurch sie keine Mehrschichtmembranen mehr sind, zumindest nicht mehr als solche einsetzbar sind.

Aufgabe der vorliegenden Erfindung ist es, eine weitere wasserdichte, wasserdampfdurchlässige Mehrschichtmembran zur Verfügung zu stellen.

Diese Aufgabe wird bei einer wasserdichten, wasserdampfdurchlässigen Mehrschichtmembran, mit mindestens einer ersten und einer zweiten Schicht, wobei alle Schichten aus einem thermoplastischen Polymer aus der Gruppe der Polyetherester, der Gruppe der Polyetheramide oder der Gruppe der Polyetherurethane bestehen und miteinander verbunden sind, dadurch gelöst, dass nebeneinander angeordnete Schichten aus thermoplastischen Polymeren unterschiedlicher Gruppen bestehen.

Es wurde nämlich gefunden, dass durch gezielte Auswahl von Polymeren es möglich ist, bei Mehrschichtmembranen trotz unterschiedlicher Polymergruppen eine akzeptable Haftung und somit Verbindung benachbarter Schichten zu erreichen und somit die Gefahr einer Delaminierung deutlich zu reduzieren. Zur Verbindung benachbarter Polymerschichten sind üblicherweise Haftvermittler nötig. Durch die erfindungsgemäße Auswahl der Polymere kann auf die Verwendung eines solchen Haftvermittlers verzichtet werden. Die Zufügung eines Weichmachers ist dabei ebenfalls nicht erforderlich. Die erfindungsgemäße Membran zeichnet sich somit insbesondere dadurch aus, dass alle Schichten keinen Weichmacher und keinen Haftvermittler enthalten. Ein weiterer Vorteil der erfindungsgemäßen Membran ist darin zu sehen, dass innerhalb der Gruppe der ausgewählten Polymere jeweils die ausgewählt werden können, die die für den jeweiligen Einsatz erforderliche Wasserdampfdurchlässigkeit gewährleisten.

Obwohl die erfindungsgemäße Mehrschichtmembran nach allen bekannten Verfahren, wie sie beispielsweise auch in EP 1 264 684 A1 aufgeführt sind ([0082]) hergestellt werden kann, hat es sich als besonders günstig herausgestellt, wenn die Mehrschichtmembran derart erzeugt wird, dass aus der zum Ausstoß der Polymeren vorgesehenen Extrusionsdüse alle vorgesehen Schichten der Membrane gemeinsam aus der Schmelze extrudiert werden. Die gewünschte Wasserdampfdurchlässigkeit lässt sich durch entsprechende Auswahl der Polymere innerhalb der vorgegebenen Gruppe und auch durch eine entsprechende Einstellung der Dicken der einzelnen Schichten auf recht einfache Weise erreichen. Die für diese Art der Herstellung von Mehrschichtmembranen geeigneten Vorrichtungen sind dem Fachmann hinreichend bekannt. Beispielsweise kann als Extrusionsdüse eine Extrusionsdüse der Firma Egan Davis eingesetzt werden, die unter der Bezeichnung "Pro Pak Conical Die" bekannt geworden ist. Bei dieser Düse wird die Schmelze der ersten Schicht auf die Wandung der Düse aufgebracht und über Druck nach oben transportiert, wonach auf die fließende Schmelze eine weitere Schmelze für die zweite Schicht, und gegebenenfalls darauf auf diese weitere Schmelzen aufgetragen werden, die dann gemeinsam aus dem am Ende der Wandung bestehendenden Ringspalt extrudiert werden. Durch entsprechende Einstellung der Strömungsmengen der einzelnen Schmelzen und der nach dem Austritt aus der Düse vorgenommenen Verstreckung in Längs- und Querrichtung kann die Schichtdicke der einzelnen Schichten der Mehrschichtmembran beeinflusst werden. Auch kann es zweckmäßig sein, als innerste und/oder als äußerste Schicht eine Trägerschicht, beispielsweise aus Polyethylen mit zu extrudieren und nach der Fertigstellung der Membran wieder abzuziehen, um eine Schädigung der Membran zu vermeiden.

Die erfindungsgsgemäße Membran enthält keinen Weichmacher, enthält also lediglich die bei Membranen üblichen Zuschlagsstoffe wie anorganische Partikel, Pigmente, thermische und/oder oxidative Stabilisatoren, UV - Stabilisatoren, Polyolefine u.ä. und/oder Antiblocking - Agentien, um ein Verkleben beim Wickeln der Membran zu vermeiden. In der Regel sollten von diesen Zuschlagstoffen nicht mehr als 15 Gew.-%, bezogen auf das Gesamtgewicht, in der Membran enthalten sein.

Die erfindungsgemäße Membran zeichnet sich insbesondere dadurch aus, dass sie eine Wasserdampfdurchlässigkeit (WVTR), gemessen nach ASTM E 96 - 95, Procedure BW, Wassertemperatur 30°C, von 3.000 bis 65.000 g/m²/24 h aufweist.

Insbesondere weist die erfindungsgemäße Membran eine Wasserdampfdurchlässigkeit (WVTR), gemessen nach ASTM E 96 - 95, Procedure B, Wassertemperatur 30°C, von 200 bis 5.000 g/m²/24 h auf.

Die erfindungsgemäßen Membranen zeichnen sich des Weiteren durch eine Gesamtdicke von 2 bis 100 µm, bevorzugt von 5 bis 50 µm aus, wobei die einzelnen Schichten gleiche Dicke, bevorzugt jedoch unterschiedliche Dicke aufweisen. Insofern können erfindungsgemäß die Vorteile der unterschiedlichen Gruppen der Polymere ausgenutzt werden.

Beispielsweise kann die dickere Schicht aus der Gruppe der Polyetherester gewählt werden und die dünnere Schicht aus der Gruppe der Polyetheramide, wobei ausgenutzt wird, dass Polyetheramide in der Regel UV - beständiger sind als Polyetherester, weshalb in der angegebenen Kombination die Schicht aus einem Polyetheramid für die Schicht aus einem Polyetherester eine Schutzschicht darstellt, wobei festzustellen ist, dass zu diesem Zweck bereits eine geringe Dicke ausreichend ist. Auch hinsichtlich einer Resistenz gegen einige Chemikalien, gegen welche die Polyetheramidschicht resistent ist, kann eine solche Schutzschicht eingesetzt werden.

Sofern eine der äußeren Schichten aus der Gruppe der Polyetherurethane gebildet ist, steigert diese Schicht die Verschweißbarkeit der Membran.

Bevorzugt besteht die erfindungsgemäße Membran aus zwei Schichten. Weiterhin haben sich Membranen, bei denen die Schichten unterschiedliche Wasserdampfdurchlässigkeiten aufweisen, bestens bewährt.

Die erfindungsgemäße Membran eignet sich besonders zur Herstellung atmungsaktiver Kleidung. Unter Kleidung werden im Sinne der vorliegenden Erfindung alle Flächengebilde verstanden, die am Körper getragen werden. Hierzu gehören insbesondere auch Handschuhe, Mützen, Hüte und Schuhe. Hierfür eignet sich die erfindungsgemäße Membran insbesondere dann, wenn sie auch nach 5 Wäschen, bevorzugt nach 10 Wäschen gemäß DIN EN ISO 6330:2000 bei 40 °C bzw. nach 7 Reinigungszyklen, bevorzugt nach 12 Reinigungszyklen gemäß DIN EN ISO 3175-1 : 1998 zumindest überwiegend noch miteinander verbunden sind. Insbesondere beim Waschen kann in den meisten Fällen festgestellt werden, dass eine Delaminierung erst nach 30 Wäschen oder mehr eintritt. Benachbarte Schichten sind dann zumindest noch überwiegend miteinander verbunden, wenn 90 % der Gesamtfläche der Membran noch verbundene Schichten und lediglich 10 % der Gesamtfläche der Membran delaminierte Flächen aufweist. Die delamierten Flächen werden daran erkannt, dass eine Delaminierung sich als Trübung der Membran darstellt.

Zur Herstellung von Kleidung werden die erfindungsgemäßen Membranen je nach Einsatzzweck ein - oder beidseitig mit textilen Flächengebilden meist über punkt-, oder linienförmig aufgebrachten Kleber verbunden, wodurch Laminate entstehen. Als textile Flächengebilde eignen sich hierzu Gewebe, Gestricke, Gewirke, Gelege, Vliese, Netze, aber auch Abstandsgewirke, und ähnliche textile Gebilde.

In einer bevorzugten Ausführungsform ist die erfindungsgemäße Membran an einer ihrer äußeren Schichten mit einem textilen Flächengebilde verbunden, wobei das textile Flächengebilde ohne zusätzlichen Kleber zu verwenden direkt an die erfindungsgemäße Membran gebunden wird, d.h. die Verbindung zwischen erfindungsgemäßer Membran und textilem Flächengebilde ist ausschließlich durch die Membran und/oder die Fasern des textilen Flächengebildes verwirklicht.

Dies kann beispielsweise durch Thermokalandrieren erfolgen. Die äußere Schicht der Membran schmilzt dabei an, wodurch das textile Flächengebilde teilweise in die äußere Schicht der Membran eindringt und so eine Verbindung mit der erfindungsgemäßen Membran entsteht.

In einer besonders bevorzugten Ausführungsform besteht das textile Flächengebilde aus thermoplastischen Polymeren mit einem Anteil niedrigschmelzender Polymere und einem Anteil höherschmelzender Polymere. Der niedrigschmelzende Anteil wird unter Hitzeeinwirkung ebenfalls, wie die äußere Schicht der erfindungsgemäßen Membran angeschmolzen, wobei zwischen der Membran und dem niedrigschmelzenden Anteil des textilen Flächengebildes eine stabile Bindung auf physikalischen oder chemischen Weg entstehen kann. Diese Art der Verbindung führt zu einer hervorragenden Haftung zwischen Membran und textilem Flächengebilde und bewirkt so einen sehr hohen Widerstand gegen Delaminierung. Die erfindungsgemäße Membran in Verbindung mit einem textilen Flächengebilde eignet sich insbesonders zur Herstellung von Kleidung, da durch das Aufbringen eines textilen Flächengebildes ein direkter Kontakt von Membran und Haut vermieden und so die Hautsensorik des die erfindungsgemäße Membran enthaltenen Kleidungstückes verbessert wird. Auf ein zusätzliches Innenfutter kann daher verzichtet werden.

Ein textiles Flächengebilde, welches aus thermoplastischen Polymeren mit einem Anteil niedrigschmelzender Polymere und einem Anteil höherschmelzender Polymere besteht, kann beispielsweise durch Verwendung von Fasern erhalten werden, die im Wesentlichen aus einem Copolymer mit einem niedrigschmelzenden und einem höherschmelzenden Polymeranteil bestehen. Dieses Copolymer kann ein Blockpolymer oder ein Pfropfpolymer sein. Solche textilen Flächengebilde in Form eines Gewebes, Gestrickes, Gewirkes, Geleges, Vlieses, Netzes bzw. Webs oder Gitters sind dem Fachmann bekannt. Sie werden beispielsweise von der Firma Hänsel Verbundtechnik oder von der Firma Protechnic angeboten und üblicherweise als Klebeschicht zwischen zwei textilen Flächengebilden eingesetzt. Die textilen Flächengebilde zur Verbindung mit der erfindungsgemäßen Membran bestehen vorteilhafterweise aus Copolyester, Copolyamid oder Copolyurethan.

Eine weitere Möglichkeit ist die Verwendung textiler Flächengebilde in Form eines Gewebes, Gestrickes, Gewirkes, Geleges, Vlieses, Netzes bzw. Webs oder Gitters, die im Wesentlichen aus Bikomponentenfasern aus einem niedrigschmelzenden Polymer und einem höherschmelzenden Polymer bestehen, wobei sich hier Kern/Mantel Bikomponentenfasern mit einem niedrigschmelzenden Mantel und einem höherschmelzenden Kern als besonders geeignet herausgestellt haben.

Selbstverständlich können geeignete textile Flächengebilde zur Verbindung mit der erfindungsgemäßen Membran einen Anteil an Fasern enthalten, die aus einem niedrigschmelzenden Polymer bestehen und einem Anteil an Fasern, die aus einem hochschmelzenden Polymer bestehen.

Es hat sich auch herausgestellt, dass die erfindungsgemäße Membran, insbesondere zu einem Laminat verarbeitet, sich besonders gut zur Herstellung von Schlafsäcken, Zelten oder Abdeckplanen eignet.

In besonderem Maß eignen sich thermoplastische Polymere, die im Wesentlichen aus den folgend genannten Komponenten bestehen, für die wasserdichte, wasserdampfdurchlässige Mehrschichtmembran gemäß der vorliegenden Erfindung:
- Polyetherester:
   Polybutylenterephthalat - 70 Gew.-%
   Polyethylenglykol (4000) - 30 Gew.
- Polyetherester:
   Polybutylenterephthalat - 50 Gew.-%
   Polyethylenglykol (2000) - 25 Gew.-%
   Polytetrahydrofuran - 25 Gew.-%
- Polyetheramid :
   Polyamid 6 - 60 Gew. %
   Polyethylenglykol (2000) - 20 Gew.-%
   Polypropylenglykol (2000) - 20 Gew.-%
- Polyetherurethan :
   Methyldiisocyanat - 42 Gew.-%
   Butandiol - 8 Gew.-%
   Polyethylenglykol - 50 Gew.-%

Die Erfindung wird anhand der nachfolgenden Beispiele näher erläutert.

Zur Herstellung der nachfolgend aufgeführten Membranen wurde als Extrusionsdüse eine Extrusionsdüse der Firma Egan Davis eingesetzt, welche unter der Bezeichnung "Pro Pak Conical Die" bekannt geworden ist. Zur Herstellung der Membran wurde ein erstes Polymer aufgeschmolzen und als erste Schicht auf die Wandung der Düse aufgebracht und über Druck nach oben transportiert. Danach wurde auf die fließende Schmelze aus dem ersten Polymer eine aus einem zweiten Polymer erschmolzene, zweite Schmelze für die zweite Schicht auf die erste Schicht aufgetragen. Beide Schmelzen wurden dann gemeinsam aus dem am Ende der Wandung bestehendenden ringförmig ausgebildeten Spalt, welcher einen Durchmesser von etwa 60 cm aufweist, extrudiert. Die durch Abkühlen der Schmelze entstandene zweischichtige Membran wird mittels Luft so weit aufgeblasen, dass die Membran einen Umfang von etwa 4 m aufwies. Diese Membran wurde danach flachgelegt und aufgewickelt.

Die Messung der Eigenschaften der Membranen wurde auf folgende Weise durchgeführt:
Die Wasserdampfdurchlässigkeit wurde nach ASTM E 96 - 1995 sowohl nach "Procedure BW - Inverted Cup Method" als auch nach "Procedure B . Upright Cup Method" gemessen, wobei in beiden Fällen die Wassertemperatur auf 30 °C eingestellt war. Beide Testmethoden wurden sowohl mit der Membranlage bestehend aus dem einen Polymer als auch mit der Membranlage bestehend aus dem anderen Polymer zur Wasserseite hin durchgeführt.

Die Wäsche der Membran wurde jeweils nach DIN EN ISO 6330:2000 bei einer Wassertemperatur von 40 °C durchgeführt. Die Reinigung der Membran erfolgte nach DIN EN ISO 3175 - 1 :1998.

### Beispiel 1

Als erstes Polymer wurde ein Polyetherester und als zweites Polymer ein Polyetheramid eingesetzt. Die zugeführten Mengen an Schmelze betrugen 40 kg/h Polyetherester und 54,5 Kg/h Polyetheramid. Die entstandene Membran hatte eine Gesamtdicke von 17 µm, wobei die Schicht aus Polyetherester eine Dicke von 7 µm und die Schicht aus Polyetheramid eine Dicke von 10 µm aufwies.

Die Polymere bestanden im Wesentlichen aus den folgenden Komponenten:

| Polyetherester : | Polyetheramid : |
|---|---|
| Polybutylenterephthalat - 70 Gew.-% | Polyamid 6 - 60 Gew. % |
| Polyethylenglykol (4000) - 30 Gew.-% | Polyethylenglykol (2000) - 20 Gew.-% |
| | Polypropylenglykol (2000) - 20 Gew.-% |

Die Wasserdampfdurchlässigkeit der hergestellten zweischichtigen Membran wies folgende Werte auf:

| | Polyetherester zur Wasserseite | Polyetheramid zur Wasserseite |
|---|---|---|
| Procedure BW (g/m²/24h) | 23.800 | 27.500 |
| Procedure B (g/m²/24h) | 2.800 | 3.000 |

Die Membran zeigte nach 38 Wäschen bzw. nach 45 Reinigungszyklen erste Delaminierungserscheinungen in Form von Trübungen in weniger als .12 % der Gesamtfläche.

### Beispiel 2

Bevor das erste Polymer der Wandung der Düse zugeführt wurde, wurde zunächst eine Schmelze aus Polyethylen als Trägerschicht der Wandung zugeführt. Dieser Trägerschicht wurde als erstes Polymer Polyetherurethan und als zweites Polymer Polyetherester zugeführt. Die zugeführten Mengen an Schmelze betrugen 47,4 kg/h Polyetherurethan und 37,1 Kg/h Polyetherester. Die entstandene Membran hatte, nachdem die Trägerschicht aus Polyethylen abgezogen war, eine Gesamtdicke von 15,5 µm, wobei die Schicht aus Polyetherurethan eine Dicke von 9 µm und die Schicht aus Polyetherester eine Dicke von 6,5 µm aufwies.

Die Polymere bestanden im Wesentlichen aus den folgenden Komponenten:

| Polyetherurethan : | Polyetherester: |
|---|---|
| Methyldiisocyanat - 42 Gew.-% | Polybutylenterephthalat - 50 Gew.-% |
| Butandiol - 8 Gew.-% | Polyethylenglykol (2000) - 25 Gew.-% |
| Polyethylenglykol - 50 Gew.-% | Polytetrahydrofuran - 25 Gew.-% |

Die Wasserdampfdurchlässigkeit der hergestellten zweischichtigen Membran wies folgende Werte auf:

| | Polyetherurethan zur Wasserseite | Polyetherester zur Wasserseite |
|---|---|---|
| Procedure BW (g/m²/24h) | 27.400 | 19.700 |
| Procedure B (g/m²/24h) | 2.970 | 2.850 |

Die Membran zeigte nach 42 Wäschen bzw. nach 51 Reinigungszyklen erste Delaminierungserscheinungen in Form von Trübungen in weniger als 8 % der Gesamtfläche.

### Beispiel 3

Als erstes Polymer wurde Polyetheramid und als zweites Polymer Polyetherurethan eingesetzt. Die zugeführten Mengen an Schmelze betrugen 76,3 kg/h Polyetheramid und 36,9 Kg/h Polyetherurethan. Die entstandene Membran hatte eine Gesamtdicke von 21 µm, wobei die Schicht aus Polyetheramid eine Dicke von 14 µm und die Schicht aus Polyetherurethan eine Dicke von 7 µm aufwies.

Die Polymere bestanden im Wesentlichen aus den folgenden Komponenten:

| Polyetheramid : | Polyetherurethan : |
|---|---|
| Polyamid 6 - 60 Gew. % | Methyldiisocyanat - 42 Gew.-% |
| Polyethylenglykol (2000) - 20 Gew.-% | Butandiol - 8 Gew.-% |
| Polypropylenglykol (2000) - 20 Gew.-% | Polyethylenglykol - 50 Gew.-% |

Die Wasserdampfdurchlässigkeit der hergestellten zweischichtigen Membran wies folgende Werte auf:

| | Polyetheramid zur Wasserseite | Polyetherurethan zur Wasserseite |
|---|---|---|
| Procedure BW (g/m²/24h) | 25.400 | 30.700 |
| Procedure B (g/m²/24h) | 3.030 | 3.180 |

Die Membran zeigte nach 45 Wäschen bzw. nach 53 Reinigungszyklen erste Delaminierungserscheinungen in Form von Trübungen in weniger als 9 % der Gesamtfläche.

## Patentansprüche

1. Wasserdichte, wasserdampfdurchlässige Mehrschichtmembran, mit mindestens einer ersten und einer zweiten Schicht, wobei alle Schichten aus einem thermoplastischen Polymer aus der Gruppe der Polyetherester, der Gruppe der Polyetheramide oder der Gruppe der Polyetherurethane bestehen und miteinander verbunden sind, **dadurch gekennzeichnet, dass** die Mehrschichtmembran weichmacherfrei ist und dass nebeneinander angeordnete Schichten aus thermoplastischen Polymeren unterschiedlicher Gruppen bestehen.

2. Membran nach Anspruch 1, **dadurch gekennzeichnet, dass** sie eine Wasserdampfdurchlässigkeit (WVTR), gemessen nach ASTM E 96 - 95, Procedure BW, Wassertemperatur 30°C, von 3.000 bis 65.000 g/m²/24 h aufweist.

3. Membran nach Anspruch 1 oder 2, **dadurch gekennzeichnet, dass** sie eine Wasserdampfdurchlässigkeit (WVTR), gemessen nach ASTM E 96 - 95, Procedure B, Wassertemperatur 30°C, von 200 bis 5.000 g/m²/24 h aufweist.

4. Membran nach einem oder mehreren der Ansprüche 1 bis 3, **dadurch gekennzeichnet, dass** sie eine Gesamtdicke von 2 bis 100 µm aufweist.

5. Membran nach Anspruch 4, **dadurch gekennzeichnet, dass** sie eine Gesamtdicke von 5 bis 50 µm aufweist.

6. Membran nach einem oder mehreren der Ansprüche 1 bis 5, **dadurch gekennzeichnet, dass** die Schichten unterschiedliche Dicken aufweisen.

7. Membran nach einem oder mehreren der Ansprüche 1 bis 6, **dadurch gekennzeichnet, dass** sie aus zwei Schichten besteht.

8. Membran nach einem oder mehreren der Ansprüche 1 bis 7, **dadurch gekennzeichnet, dass** die Schichten unterschiedliche Wasserdampfdurchlässigkeiten aufweisen.

9. Membran nach einem oder mehreren der Ansprüche 1 bis 8, **dadurch gekennzeichnet, dass** die Schichten der Membran auch nach 5 Wäschen gemäß DIN EN ISO 6330:2000, jedoch bei 40 °C zumindest überwiegend noch miteinander verbunden sind.

10. Membran nach Anspruch 9, **dadurch gekennzeichnet, dass** die Schichten der Membran auch nach 10 Wäschen gemäß DIN EN ISO 6330:2000, jedoch bei 40 °C zumindest überwiegend noch miteinander verbunden sind.

11. Membran nach einem oder mehreren der Ansprüche 1 bis 10, **dadurch gekennzeichnet, dass** die Schichten der Membran auch nach 7 Reinigungszyklen gemäß DIN EN ISO 3175 - 1: 1998 zumindest überwiegend noch miteinander verbunden sind.

12. Membran nach Anspruch 11, **dadurch gekennzeichnet, dass** die Schichten der Membran auch nach 12 Reinigungszyklen gemäß DIN EN ISO 3175 - 1 : 1998 zumindest überwiegend noch miteinander verbunden sind.

13. Membran nach einem oder mehreren der Ansprüche 1 bis 12, **dadurch gekennzeichnet, dass** die Membran an einer ihrer äußeren Schichten mit einem textilen Flächengebilde verbunden ist.

14. Membran nach Anspruch 13, **dadurch gekennzeichnet, dass** die Verbindung zwischen erfindungsgemäßer Membran und textilem Flächengebilde ausschließlich durch die Membran und/oder die Fasern des textilen Flächengebildes verwirklicht ist.

15. Membran nach Anspruch 13 oder 14, **dadurch gekennzeichnet, dass** das textile Flächengebilde ein Gewebe, Gestricke, Gewirke, Gelege, Vlies, Netz bzw. Web oder Gitter ist.

16. Membran nach einem oder mehreren der Ansprüche 13 bis 15, **dadurch gekennzeichnet, dass** das textile Flächengebilde einen Anteil niedrigschmelzende Polymere und eine Anteil höherschmelzende Polymere enthält.

17. Verwendung der Membran nach einem oder mehreren der Ansprüche 1 bis 16 zur Herstellung von Laminaten.

18. Verwendung der Membranen nach einem oder mehreren der Ansprüche 1 bis 16 oder von aus diesen Membranen hergestellten Laminaten zur Herstellung von Kleidung.

19. Verwendung der Membranen 1 bis 16 oder von aus diesen Membranen hergestellten Laminaten zur Herstellung von Schlafsäcken, Zelten oder Abdeckplanen.

## Claims

1. Watertight, water-vapour permeable multi-layer membrane, having at least one first and one second layer, wherein all layers are made of a thermoplastic polymer from the group of the polyether esters, the group of the polyether amides or the group of the polyether urethanes, and are connected with one another, **characterised in that** the multi-layer membrane is free of plasticiser and that layers disposed adjacent to one another are made of thermoplastic polymers of different groups.

2. Membrane according to claim 1, **characterised in that** it has a water-vapour permeability (WVTR), measured according to ASTM E 96 - 95, procedure BW, water temperature 30°C, of 3,000 to 65,000 g/m²/24 h.

3. Membrane according to claim 1 or 2, **characterised in that** it has a water-vapour permeability (WVTR), measured according to ASTM E 96 - 95, procedure B, water temperature 30°C, of 200 to 5,000 g/m²/24 h.

4. Membrane according to one or more of claims 1 to 3, **characterised in that** it has a total thickness of 2 to 100 µm.

5. Membrane according to claim 4, **characterised in that** it has a total thickness of 5 to 50 µm.

6. Membrane according to one or more of claims 1 to 5, **characterised in that** the layers have different thicknesses.

7. Membrane according to one or more of claims 1 to 6, **characterised in that** it consists of two layers.

8. Membrane according to one or more of claims 1 to 7, **characterised in that** the layers have different water-vapour permeabilities.

9. Membrane according to one or more of claims 1 to 8, **characterised in that** the layers of the membrane even after 5 washes according to DIN EN ISO 6330:2000, nevertheless at 40°C are at least predominantly still connected with one another.

10. Membrane according to claim 9, **characterised in that** the layers of the membrane even after 10 washes according to DIN EN ISO 6330:2000, nevertheless at 40°C are at least predominantly still connected with one another.

11. Membrane according to one or more of claims 1 to 10, **characterised in that** the layers of the membrane even after 7 cleaning cycles according to DIN EN ISO 3175 - 1 : 1998 are at least predominantly still connected with one another.

12. Membrane according to claim 11, **characterised in that** the layers of the membrane even after 12 cleaning cycles according to DIN EN ISO 3175 - 1: 1998 are at least predominantly still connected with one another.

13. Membrane according to one or more of claims 1 to 12, **characterised in that** the membrane is connected at one of its outer layers with a textile sheet material.

14. Membrane according to claim 13, **characterised in that** the connection between membrane according to the invention and textile sheet material is realised exclusively by the membrane and/or the fibres of the textile sheet material.

15. Membrane according to claim 13 or 14, **characterised in that** the textile sheet material is a woven fabric, a knitted fabric, a stitch-bonded fabric, an interlaid scrim, a non-woven fabric, a mesh or web or lattice.

16. Membrane according to one or more of claims 13 to 15, **characterised in that** the textile sheet material contains a proportion of polymers with low melting points and a proportion of polymers with higher melting points.

17. Use of the membrane according to one or more of claims 1 to 16 for manufacturing laminates.

18. Use of the membranes according to one or more of claims 1 to 16 or laminates manufactured from these membranes to manufacture clothing.

19. Use of the membranes according to one or more of claims 1 to 16 or laminates manufactured from these membranes for the manufacture of sleeping bags, tents or tarpaulins.

## Revendications

1. Membrane multicouche étanche à l'eau et perméable à la vapeur d'eau, avec au moins une première et une deuxième couche, dans laquelle toutes les couches sont en un polymère thermoplastique du groupe des polyétheresters, du groupe des polyétheramides ou du groupe des polyétheruréthanes et sont assemblées les unes aux autres, **caractérisée en ce que** la membrane multicouche est sans plastifiant et **en ce que** des couches disposées les unes à côté des autres sont en des polymères thermoplastiques de groupes différents.

2. Membrane selon la revendication 1, **caractérisée en ce qu'**elle présente une perméabilité à la vapeur d'eau (WVTR), mesurée selon la norme ASTM E 96-95, procédure BW, température de l'eau 30 °C, de 3 000 à 65 000 g/m²/24h.

3. Membrane selon la revendication 1 ou 2, **caractérisée en ce qu'**elle présente une perméabilité à la vapeur d'eau (WVTR), mesurée selon la norme ASTM E 96-95, procédure B, température de l'eau 30 °C, de 200 à 5 000 g/m²/24h.

4. Membrane selon une ou plusieurs des revendications 1 à 3, **caractérisée en ce qu'**elle a une épaisseur totale de 2 à 100 µm.

5. Membrane selon la revendication 4, **caractérisée en ce qu'**elle a une épaisseur totale de 5 à 50 µm.

6. Membrane selon une ou plusieurs des revendications 1 à 5, **caractérisée en ce que** les couches ont des épaisseurs différentes.

7. Membrane selon une ou plusieurs des revendications 1 à 6, **caractérisée en ce qu'**elle est constituée de deux couches.

8. Membrane selon une ou plusieurs des revendications 1 à 7, **caractérisée en ce que** les couches présentent des perméabilités à la vapeur d'eau différentes.

9. Membrane selon une ou plusieurs des revendications 1 à 8, **caractérisée en ce que** les couches de la membrane sont au moins majoritairement encore assemblées les unes aux autres après 5 lavages selon la norme DIN EN ISO 6330:2000, toutefois à 40 °C.

10. Membrane selon la revendication 9, **caractérisée en ce que** les couches de la membrane sont au moins majoritairement encore assemblées les unes aux autres après 10 lavages selon la norme DIN EN ISO 6330:2000, toutefois à 40 °C.

11. Membrane selon une ou plusieurs des revendications 1 à 10, **caractérisée en ce que** les couches de la membrane sont au moins majoritairement encore assemblées les unes aux autres après 7 cycles de nettoyage selon la norme DIN EN ISO 3175-1:1998.

12. Membrane selon la revendication 11, **caractérisée en ce que** les couches de la membrane sont au moins majoritairement encore assemblées les unes aux autres après 12 cycles de nettoyage selon la norme DIN EN ISO 3175-1:1998.

13. Membrane selon une ou plusieurs des revendications 1 à 12, **caractérisée en ce que** la membrane est assemblée au niveau d'une de ses couches extérieures avec une matière textile plate.

14. Membrane selon la revendication 13, **caractérisée en ce que** l'assemblage entre la membrane selon l'invention et la matière textile plate est réalisé exclusivement par la membrane et/ou par les fibres de la matière textile plate.

15. Membrane selon la revendication 13 ou 14, **caractérisée en ce que** la matière textile plate est un tissu, un tricot, un tulle, un non-tissé, un filet ou toile ou un treillis.

16. Membrane selon une ou plusieurs des revendications 13 à 15, **caractérisée en ce que** la matière textile plate contient une proportion de polymère à bas point de fusion et une proportion de polymère à haut point de fusion.

17. Utilisation de la membrane selon une ou plusieurs des revendications 1 à 16 pour la fabrication de produits laminés.

18. Utilisation des membranes selon une ou plusieurs des revendications 1 à 16 ou de produits laminés fabriqués à partir de ces membranes pour la fabrication de vêtements.

19. Utilisation des membranes selon une ou plusieurs des revendications 1 à 16 ou de produits laminés fabriqués à partir de ces membranes pour la fabrication de sacs de couchage, de tentes ou de bâches.
